Europäisches Patentamt

(19) European Patent Office

Office européen des brevets

(11) Publication number: **0 208 034**
**A1**

(12) **EUROPEAN PATENT APPLICATION**

(21) Application number: **85304935.1**

(22) Date of filing: **10.07.85**

(51) Int.Cl.⁴: **A 01 F 15/14**

(43) Date of publication of application:
**14.01.87 Bulletin 87/3**

(84) Designated Contracting States:
**DE FR IT NL SE**

(71) Applicant: **Eight Milieu Nominees Pty. Ltd.**
**1257 Sydney Road**
**Fawkner Victoria(AU)**

(72) Inventor: **Williamson, Kenneth**
**1257 Sydney Road**
**Fawkner Victoria(AU)**

(74) Representative: **Gillam, Francis Cyril et al,**
**Sanderson & Co. 97 High Street**
**Colchester Essex C01 1TH(GB)**

(54) Improvements relating to the wrapping of hay bales.

(57) A method and apparatus for wrapping a round hay bale (30) with impervious material (16) to envelop the hay in airtight relationship useful for the process of ensilage of hay fodder wherein the plastic is wrapped by rotating the hay bale around its horizontal and vertical axes simultaneously by a rotatable turntable device (11) and including apparatus (20) for pick-up and off-loading of the bale.

FIG.3d.

EP 0 208 034 A1

IMPROVEMENTS RELATING TO THE WRAPPING OF HAY BALES

This invention relates to the wrapping of hay bales, particularly, round bales. Large round hay bales lend themselves to the production of silage because of their relative bulkiness, however, difficulties have been experienced in the effective and quick wrapping of such bales when the bales are still in the field.

Wrapping of hay bales in preformed plastic bags or by wrapping using a single axis turntable is known to applicants. However, there are difficulties with such methods in forming an airtight seal to prevent ingress of air which will spoil the silage forming process. Furthermore, the operation is limited to specific bag sizes which do not necessarily form a tight fit around the bale. If this occurs a small hole formed in the bag will mean large scale spoilage of the bag for a wide area around the hole, and possibly spoilage of all the material within the bag.

The present invention has as its main objective to provide a method and apparatus for wrapping hay bales such that the spoilage effects of atmosphere on the hay when lying in the field are minimised.

A further objective is to provide a method and apparatus for producing silage wherein the abovementioned problems are minimised whilst performing the objective in a more efficient manner.

There is provided according to the present invention a method of wrapping a hay bale including the steps of supporting the bale on a rotatable support, said support being capable of rotation about two axes, attaching a sheet of substantially air impervious material to said bale, rotating said bale about said two axes until said sheet envelops said bale in close air tight relationship.

An apparatus for carrying out the method of the invention is also provided wherein a bale support means is mounted for rotation about two perpendicular axes, and a means for wrapping a sheet substantially impervious to air tightly around a bale of hay in order to adhere to itself and to the hay.

Conveniently, the apparatus is mounted on a vehicle such as by the standard 3 point linkage of a farm tractor. The apparatus may utilise hydraulic motors connected to a hydraulic pump fitted on said vehicle, said motors being adapted to drive said support means about said two axes.

The roller motor is supplied with hydraulic fluid through a rotary coupling.

Alternatively, the apparatus may be mounted upon a wheeled trailer adapted to be towed behind a vehicle having a self-contained hydraulic pressure system or connected into a separable hydraulic system on the towing vehicle.

The apparatus may include means for lifting a round bale from the ground onto the turntable and also means for tilting the turntable to off-load a wrapped bale.

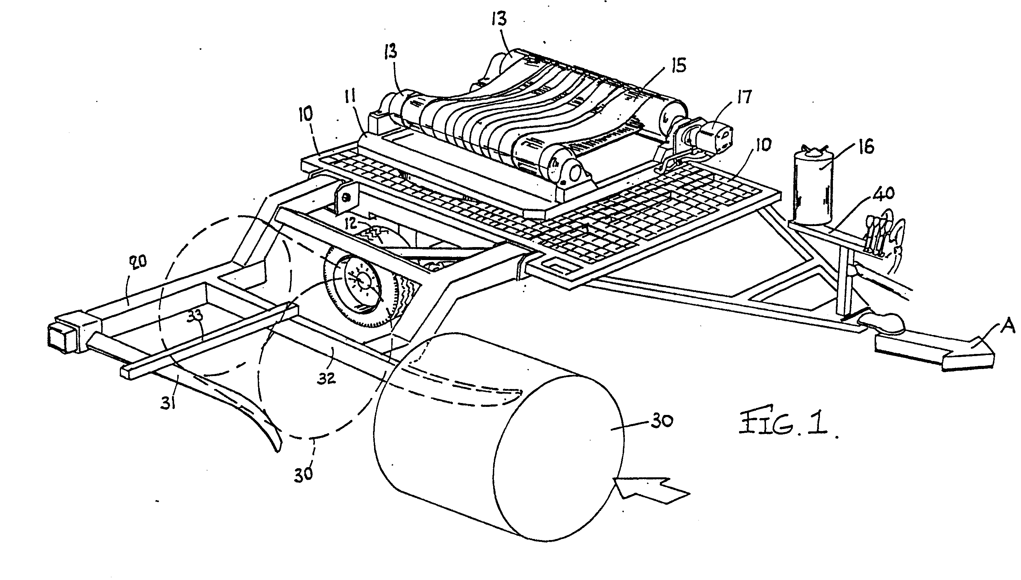

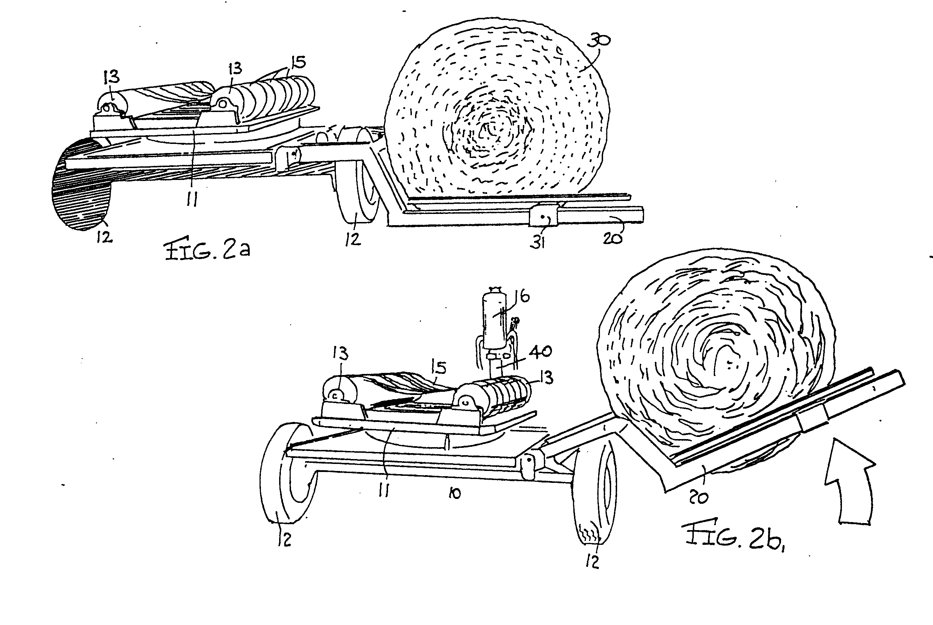

The invention will be described having reference to the accompanying sketches in which Figure 1 is a perspective view of the silage making and wrapping apparatus.

Figure 2a is a rear perspective view of a bale wrapper during a bale pick-up action.

Figures 2(b), (c) and (d) show various steps in a bale pick up.

Figures 3(a), (b), (c) and (d) show the actual wrapping procedure.

Figure 4 shows the off-loading procedure.

The apparatus includes a mobile support frame 10 upon which is mounted a turntable 11 supported upon wheels 12. A circular bale 30 positioned on the ground is initially loaded by moving the support frame forward in the direction of arrow A such that fork arms 31, 32 of a pivotal outrigger arm construction 20 engage under the bale. As shown in phantom outline at 30' in Figure 1, the bale 30 engages against a locating stop bar 33 and is thereby in position for subsequent loading. The fork arm 31

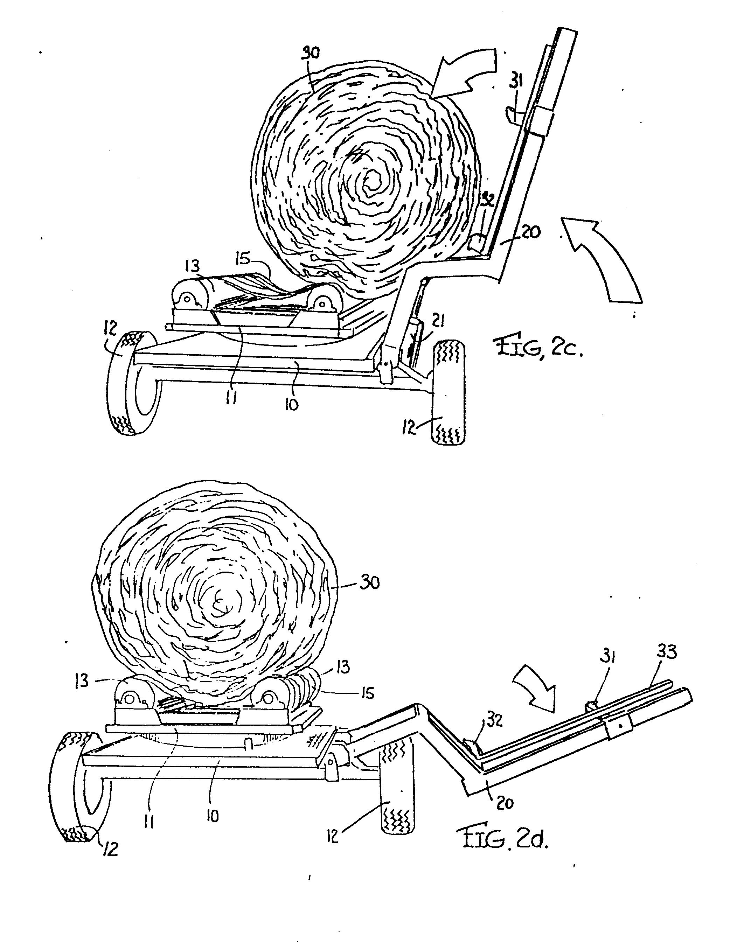

is adjustably movable to allow for differing sizes of the bales 30. The bale 30 is loaded by moving pivotal outrigger arm 20 upward by actuation of hydraulic ram 21 such that the bale rolls onto rollers 13 arranged on the turntable 11. The series of movements in this regard are illustrated successively in Figures 2a, 2b, 2c and 2d. The turntable includes rotatable rollers 13 for supporting the round hay bale 30. The turntable 11 and rollers 13 are preferably driven by hydraulic motors e.g 17, whereby when a round bale is supported on the rollers 13 there is simultaneous rotation of the bale about two substantially perpendicular axes.

Conveniently one roller 13 is driven by a suitable hydraulic motor 17 and the second roller may be driven by belts 15 which interconnect the two rollers. The belts 15 thus serve the dual purpose of supporting the bale 30 as well as driving one of the rollers 13. Moreover, the turntable 11 is itself rotated about a substantially vertical axis by a suitable hydraulic motor (not shown). In consequence when a hay bale 30 is supported on the rollers 13 and belts 15, it may be rotated about its own essentially horizontally disposed axis while simultaneously being rotated about the substantially vertical axis of rotation of the turntable 11.

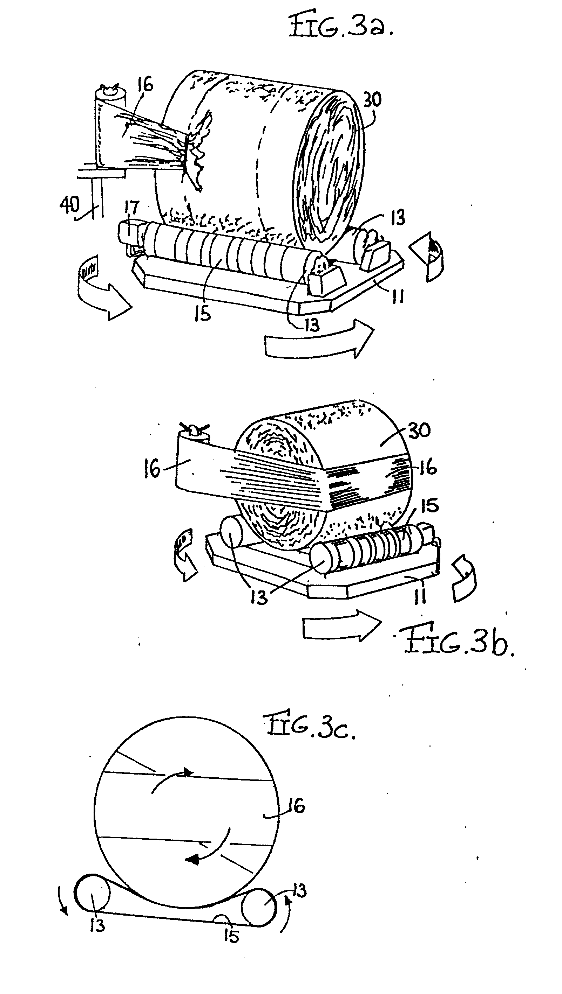

A stand 40 is provided supporting a roll of plastic film such as sheet 16. The film or sheet 16 might be any air impervious material having adhesive qualities on at least one face or be such as to be able to adhere to itself. In the operation see Figures 3(a), (b),(c) and (d) of the invention the film or sheet is attached to the bale and rotation of the bale is commenced. The sheet preferably has a sticky backing whereby it is unreeled by movement of the bale and the bale is very quickly completely enveloped by the sheet such that a substantially close fitting air tight package for the bale is formed. The plastic sheet may be of soft composition so as to be self-adhesing as it is wrapped onto the bale. This hermetic sealing of the bale enables the bale to undergo chemical change and form silage.

As is demonstrated in Figures 3a to 3d, an operator first secures the end of the plastic film or sheet to the bale as it is supported on the rollers and belts 13, 15. The film roll support stand 40 may include means to ensure tensioning of the film. Preferably the amount of tensioning might be adjustable.

Subsequently the turntable 11, and therefore the bale 30 is rotated about a vertical axis and single strip of plastic film 16 is wrapped around the bale 30 after one complete rotation (Figures 3a, 3b). The rollers 13 rotate the bale about its own horizontal axis, preferably by a distance equivalent to half the width of the plastic film. The table is rotated a second time and second plastic strip (overlapping the first plastic strip) is wrapped around the bale. The process of course continues in this manner with the movement about the respective axes occurring preferably simultaneously with the end result of substantially two layers of the plastic film 16 enveloping the bale 30 as seen in Figure 3c. It is generally preferred to repeat the process to provide effectively four layers of plastic film over the bale.

The close fitting nature of the package ensures that small punctures will not unduly influence the formation of silage because atmospheric air cannot penetrate beyond the immediate location of the puncture.

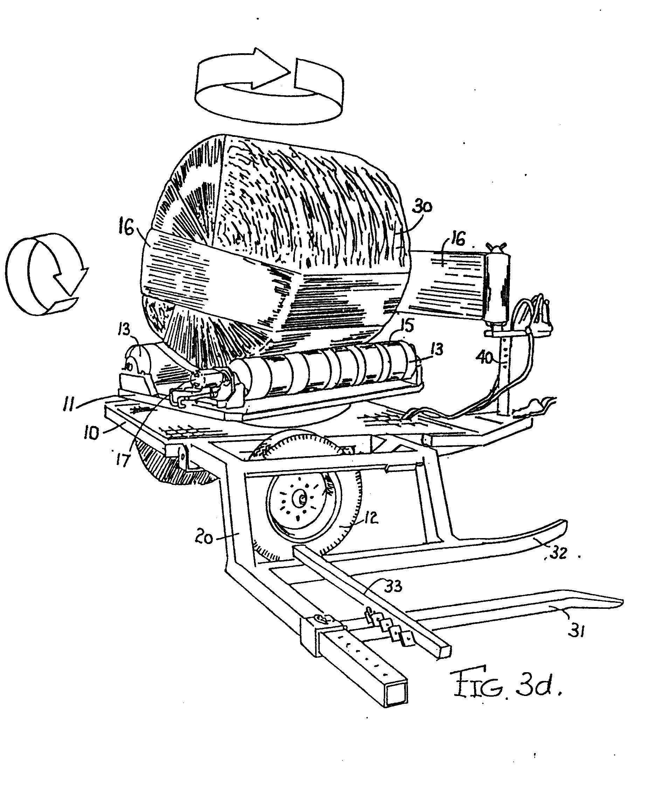

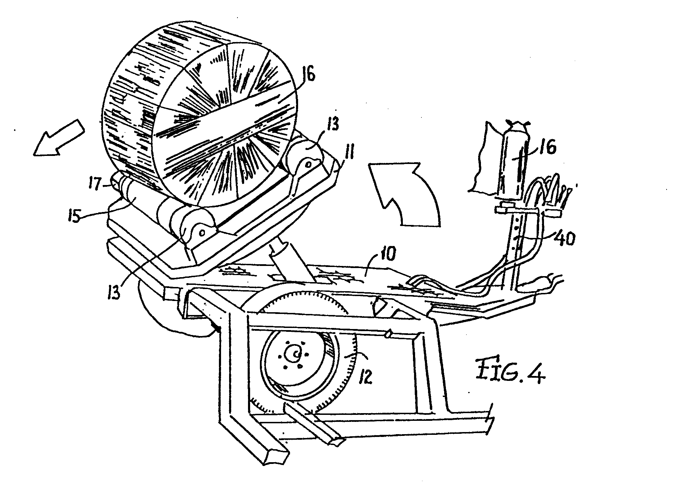

With reference to Figure 4 the turntable is hydraulically tiltable to enable off-loading of the wrapped bale after turning of the turntable through $90^{\circ}$ to allow unloading from the rear.

The roller stand for the plastic sheet 16 is adapted to pay out sheet during a wrapping operation. The tension of the sheet may be controlled by the operator to achieve an optimum wrapping tension.

As the bale is wrapped by overlapping strips the bale has a two ply covering. Preferably the bale is double wrapped.

## CLAIMS.

1.    A method of wrapping a hay bale including the steps of supporting the bale on a rotatable support, said support being capable of rotation about two axes, attaching a sheet of substantially air impervious material to said bale, rotating said bale about said two axes until said sheet envelops said bale in close air tight relationship.

2.    A method according to claim 1 wherein said axes are mutually perpendicular.

3.    A method according to claim 1 wherein said rotation occurs simultaneously about both said axes.

4.    Apparatus for handling a hay bale including a turntable for rotatably supporting a hay bale, said turntable being rotatable about a substantially vertical axis, the turntable including rotatable support means thereon for rotating the bale in a substantially horizontal axis and means for wrapping a sheet of substantially impervious material around the bale whilst it is being rotated about said axes.

5.    Apparatus for handling a hay bale as claimed in claim 4 wherein a lifting means is provided to lift a bale from the ground onto said turntable support.

6.    Apparatus for handling a hay bale as claimed in claim 2 wherein the turntable is tiltable to allow off-loading of a wrapped bale.

7.    A method of forming hay silage comprising the steps of wrapping a hay bale as claimed in claim 1 so that the hay is maintained and sealed from atmosphere to allow formation of silage.

8.    Apparatus as claimed in claim 4 wherein the impervious material is a plastics material which is capable of adhering to itself.

FIG. 1.

0208034

FIG. 2a

FIG. 2b,

FIG. 2c.

FIG. 2d.

0208034

## FIG.3a.

## FIG.3b.

## FIG.3c.

FIG. 3d.

FIG.4

**European Patent Office**

**0208034**
Application number

**EUROPEAN SEARCH REPORT**

EP   85 30 4935

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 281 500   (MUELLER et al.)  * figures 1a-1e, 2; claim 1 * | 1-4,6, 8 | A 01 F   15/14 |
| Y | EP-A-0 110 110   (DARIO MANULI)  * figure 1; claims 1, 7 * | 1-8 | |
| Y | DE-A-3 311 279   (MOOSBRUCKER)  * claims 1-4 * | 1-8 | |
| Y | FR-A-2 533 410   (TRIOLET-MULLOS SILO NEDERLAND)  * figure 2; claim 11 * | 5 | |
| E | GB-A-2 159 489   (EIGHT MILIEU NOMINEES PTY. Ltd.)  * whole document * | 1 | |

TECHNICAL FIELDS
SEARCHED (Int. Cl 4)

A 01 F   15/14
A 01 F   15/00
A 01 F   25/14
A 01 F   25/00
B 65 B   11/28
B 65 B   11/04

The present search report has been drawn up for all claims

| Place of search | Date of completion of the search | Examiner |
|---|---|---|
| BERLIN | 21-11-1985 | SAMWEL P.N. |